# EUROPEAN PATENT APPLICATION

(11) **EP 0 792 793 A2**
(43) Date of publication of application: **03.09.1997**
(21) Application number: 96306977.8
(22) Date of filing: 25.09.1996
(51) Int. Cl.: B62D 53/08

(54) **Self lubricating fifth wheel hitch**

(30) Priority: 10.10.1995 US 541398
(71) Applicant: HOLLAND HITCH COMPANY, Holland, Michigan 49422-2099 (US)
(72) Inventor: Cross, Philip James, Holland, Michigan 49423 (US)
(74) Representative: Roberts, Gwilym Vaughan

(57) **Abstract**

A fifth wheel hitch having a fifth wheel hitch plate (12), a plurality of lubricious polymeric pads (22,24) configurated to form a bearing surface over the hitch plate (12), the pads (22,24) having a plurality of downwardly extending integral bosses (22a) on the underside thereof in a spaced pattern corresponding to a like spaced pattern of a plurality of vertical orifices (20) extending through the steel hitch plate (12), a first set of a plurality of fastener elements (30) embedded in these bosses (22a), and a second set of a plurality of cooperative fastener elements (32) in the pattern of these orifices (20), one of said sets of fasteners (30) extending through the bosses (22a) and the hitch plate orifices (20) for attachment with the other set, whereby the fasteners (30) prevent vertical displacement of the pads (22,24) and the bosses (22a) prevent lateral displacement of the pads (22,24), and nearly the entire pad (22,24) thickness can be worn.

## Description

This invention relates to fifth wheel hitches and particularly to a self lubricating fifth wheel hitch assembly.

A common hitch for hauling trailers is the well-known fifth wheel hitch which has a large bifurcated bearing plate that receives a trailer kingpin and locks it in place with one or more jaws. The kingpin is mounted on a trailer and has an overlying bearing plate which rests upon and pivots on the hitch upper surface, to enable articulation between the trailer and its towing tractor. This pivotal action is typically aided by a layer of grease on the hitch surface. Because this grease is not only messy but also tends to retain dirt and dust which cause wear, it is undesirable.

Various attempts have been made to provide a lubricious surface layer for the hitch without the extensive amount of grease normally required. These efforts are believed to be largely set forth or represented by U.S. Patents 5,431,424 to Colwell; 5,263,856 to Huehn et al; 3,174,812 to Widmer; 3,704,924 to Lowry; 3,275,390 to Franks; 5,066,035 to Athans et al; 3,924,909 to Kent et al; 4,121,853 to McKay; 4,169,635 to Szalay et al; 4,457,531 to Hunger; 4,542,912 to St. Louis; 4,752,081 to Reeners et al; and 4,805,926 to Mamery. Many of these would require total redesign of the hitch. Others involve fastening devices undesirably exposed on the top of the lubricious material. Some have the lubricious layer rather permanently mounted to the hitch so that replacement of a worn product is extremely difficult and costly. Structures such as in Patent 3,174,812 require special cavities in the fifth wheel, and only provide a small bearing surface area considered inadequate. As a consequence of these and related shortcomings, fifth wheel hitches in use still basically comprise the well-known grease coated metal plate.

The invention is defined in the independent claims appended hereto. Preferred features are set out in the dependent claims.

An object of this invention is to provide a fifth wheel hitch having specially configurated, interfitting lubricious pads specially mounted onto the hitch plate covering a substantial portion of the bearing surface, arranged to enable the pads to perform independently to a degree allowing localized motion between that lubricious pad and the overlying trailer bearing plate, and mounted in a manner to enable practically the entire thickness of the pad to be worn away before replacement. Lubricious polymer layer segments form replaceable segmental pads which each have downwardly extending bosses on a spaced-apart pattern of orifices extending through the hitch plate. The bosses are of a configuration and size to fit within these orifices. Pad retainers in the form of bolts, nuts or clevis pins are embedded down into the pads in alignment with these bosses and orifices. Cooperative fastener elements are beneath the hitch plate, aligned with the orifices. Either the upper or the lower fasteners extend through the bosses and orifices. The pads are preferably in groups of two, three or six, with lateral pads being in mirror image arrangement. Washers are preferably provided around said retainers and beneath said bosses, larger in diameter than the diameter of said orifices, to prevent said pads lifting off said hitch plate.

The bosses laterally stabilize the pads to prevent lateral displacement. The fasteners retain the pads down onto the hitch plate to prevent vertical displacement. Each pad is able to transfer torsional loading to an adjacent pad for cooperative mutual support, yet allowing independent surface-to-surface action between each pad and the trailer bearing plate.

The novel fastening system enables substantially the complete thickness of the pad to be used before pad replacement is required. The fasteners do not protrude above the top surface of the steel hitch plate. Fasteners are forcefully embedded down into the molded polymeric pads to cooperate with fasteners below the steel hitch plate. Three embodiments of these fasteners are set forth herein.
The individual pads can be selectively removed and replaced. A minimum of molds is needed to form the polymeric pad elements.

Embodiments of the invention will now be described, by way of example, with reference to the drawings of which:

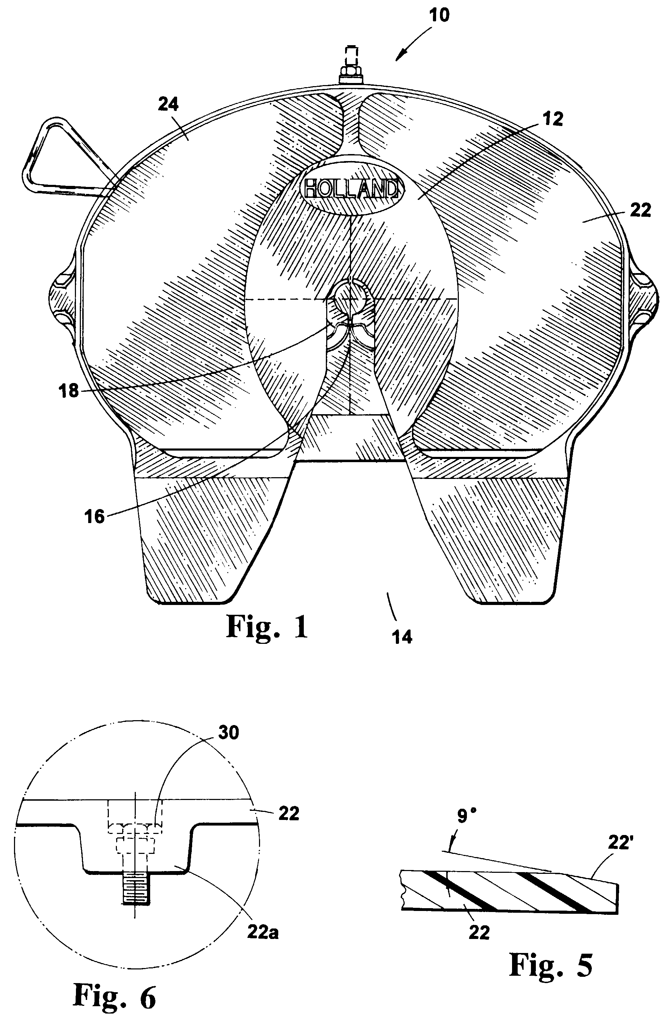

Fig. 1 is a top plan view of a hitch of this invention, utilizing a two pad arrangement;

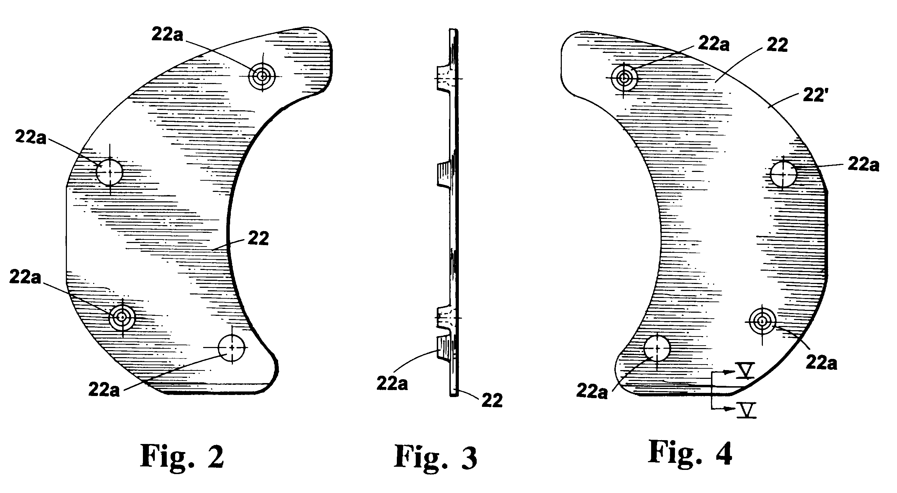

Fig. 2 is a top plan view of the left pad in Fig. 1, of which the right pad is a mirror image;
Fig. 3 is a side elevational view of the left pad in Fig. 2;
Fig. 4 is a bottom view of the pad in Figs. 2 and 3;
Fig. 5 is an enlarged, fragmentary, elevational view of an outer edge portion of the pad in Fig. 2;
Fig. 6 is an enlarged, fragmentary, elevational view of a portion of the pad with a boss and incorporating a first embodiment fastener;
Fig. 7 is an enlarged, fragmentary, elevational view of a pad, a boss and first embodiment fastener, mounted on a hitch plate;
Fig. 8 is an enlarged, fragmentary, elevational view of a pad, a boss and a second embodiment fastener, mounted on a hitch plate; and
Fig. 9 is an enlarged, fragmentary, elevational view of a pad, a boss and a third embodiment fastener mounted on a hitch plate.

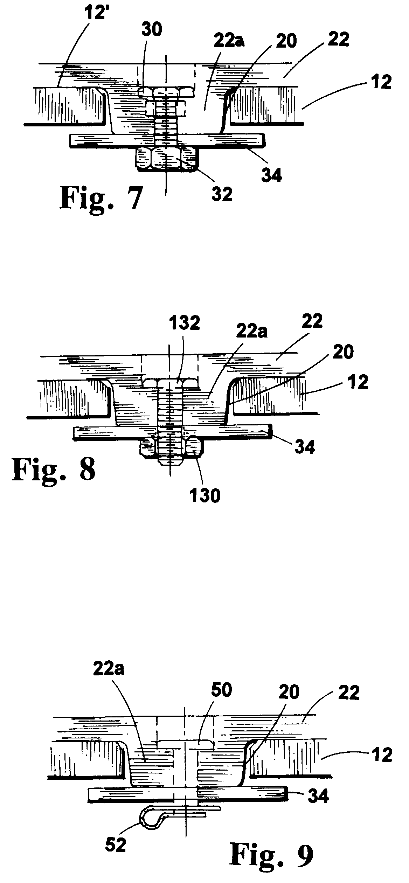

Referring now specifically to the drawings, the complete fifth wheel assembly 10 there depicted includes a fifth wheel hitch plate 12 having a bifurcated rear portion defining a kingpin-receiving mouth 14, throat 16 and conventional latch mechanism 18. The latch mechanism is typically formed of a pair of locking jaws pivotally mounted to plate 12 so as to move between an open position receiving a kingpin therebetween and a closed position retaining the kingpin in a conventional manner such as that set forth, for example, in U.S. Patent 4,428,595 to Martin et al. This plate, made of steel, has an upper surface 12', see, e.g., Fig. 7, and a plurality of orifices 20 extending through the hitch plate in a spaced apart pattern over the hitch bearing plate. A plurality of lubricious, polymeric pads 22 and 24, preferably two in number, are configurated to be interfitting with each other to form a lubricious bearing surface over the hitch plate. These two pads are in mirror image to each other, each having an arcuate configuration from front to rear of the hitch plate. A typical thickness of such pads is approximately one-quarter inch. Around the periphery of each pad, on the upper surface thereof, is a downwardly sloped edge 22'. Specifically, the upper surface edge slopes downwardly and outwardly at a small acute angle of about nine degrees to the horizontal (Fig. 5). The width of this sloped edge is preferably about three-eights inch (9.5mm). Because pad 24 is of mirror image to pad 22, only pad 22 will be described in detail, with pad 24 having like features in mirror image. Beneath each pad, integral therewith, and extending downwardly therefrom and thereof, are a plurality of bosses 22a. These integral projections 22a are in a spaced apart pattern on the pads corresponding to the orifice spaced apart pattern in the fifth wheel plate. Each integral boss 22a has a width and configuration to fit down within the respective orifice with a slight surrounding clearance therebetween, as depicted for example in Fig. 7. Preferably the periphery of each boss is tapered downwardly inwardly in a frustoconical configuration, and has a downwardly projecting dimension equal to or slightly greater than the thickness of the fifth wheel plate 12. These bosses resist shear loading of the trailer bolster plate on the lubricious pad surface during coupling and operation.

In Fig. 7 is depicted a first embodiment of the novel fastener mechanism wherein a nut 30 is press fit down into the cylindrical boss from the top of the boss until its upper surface is corresponding to or slightly above the upper surface 12' of hitch plate 12. This nut 30 is threaded in its interior so as to receive the threaded stud portion of a bolt 32 inserted from the bottom and into the bottom of boss 22a. An enlarged washer 34 between the head of bolt 32 and the bottom of boss 22a is greater in diameter than that of orifice 20 to prevent the lubricious pad from being vertically lifted off the fifth wheel plate.

Fig. 8 shows a second embodiment fastener arrangement wherein a bolt 132 is press fit, i.e., forced vertically down from the top of pad 22, through boss 22a so that its threaded stud end projects out the bottom of the boss for attachment of a nut 130 to the projecting stud end of the bolt. The head of the bolt is within the boss, with the upper surface of this bolt being even with or slightly above the upper surface 12' of hitch plate 12. A large washer 34 is beneath plate 12, i.e., between nut 130 and the bottom surface of boss 22a, being larger in diameter than orifice 20 to prevent the lubricious pad from being lifted off the plate 12.

In Fig. 9 is disclosed a third embodiment fastener arrangement wherein a clevis pin 50 is force fit down into the top of pad 22, having its head in the boss and its stud length sufficiently long to project down through the bottom of boss 22a to be beneath it and plate 12. Clevis pin 50 has a transverse opening therethrough at the bottom to receive a hairpin-type cotter 52 or the equivalent. A washer 34 between cotter 52 and the bottom surface of boss 22a is larger in diameter than orifice 20 to prevent the lubricious pad from being lifted off the steel plate.

Thus, in each of the three embodiments depicted in Figs. 7, 8 and 9, the upper surface of the fastener, whether it be a nut 30, a bolt 132, or a clevis pin 50, is at least as low as the upper surface 12' of steel plate 12 so that the entire thickness of the lubricious pads can be utilized as wear surfaces without the trailer plate engaging the fasteners, or in the case of the fasteners being positioned slightly above the upper surface 12' of steel plate 12, these fasteners would indicate the service limit and need for pad replacement as the pad wore down to a level corresponding to the fastener, thereby exposing the head of the fastener.

Those familiar with this field of endeavour will likely conceive of variations of the disclosed embodiments to suit a particular purpose or type of hitch. It is not intended that the invention herein should be limited to the specific embodiments depicted as exemplary and preferred, but only by the scope of the appended claims and the equivalent structures to those defined therein.

## Claims

1. A fifth wheel hitch comprising:
a fifth wheel hitch plate (12) having a bifurcated rear portion defining a kingpin- receiving mouth (14), throat (16) and latch (18), an upper surface (12'), and including at least one orifice (20) extending through said hitch plate;
at least one lubricious pad (22,24) configurated to form a bearing top surface over said hitch plate to withstand shear loads and torsional loads; characterised by:
the or each pad each having at least one integral boss (22a) extending downwardly therefrom;
the or each boss being located corresponding to said orifice location, and having a width and configuration to fit down within said orifice; and
a fastener (30) extending down through said pad and said boss, being recessed below said top surface of said pad, and including a retainer (32) in said pad and beneath said hitch plate, whereby said boss resists lateral movement of said pad and said retainer resists vertical movement of said pad.

2. The fifth wheel hitch in claim 1 wherein said retainer in said pad (22,24) comprises a threaded bolt (132) extending down through said boss (22a) and said hitch plate, and said retainer beneath said hitch plate comprises a threaded nut (130).

3. The fifth wheel hitch in claim 1 wherein said retainer in said pad (22,24) comprises a threaded nut (30) and said retainer beneath said hitch plate comprises a threaded bolt (32) extending up through said hitch plate and said boss (22a) into said threaded nut.

4. The fifth wheel hitch in claim 2 or 3 including a washer (34) around said bolt beneath said hitch plate, and larger in diameter than said orifice (20).

5. The fifth wheel hitch in claim 1 wherein said retainer (30) in said pad (22,24) comprises a clevis pin (50) extending down through said boss (22a) and said hitch plate, and said retainer below said hitch plate comprises a cotter pin (52).

6. The fifth wheel hitch in claim 5 including a washer (34) around said clevis pin (50) beneath said hitch plate and above said cotter pin (52), and larger in diameter than said orifice (20).

7. The fifth wheel hitch as claimed in any preceding claim wherein said fastener (36) extending down through said pad and said boss (22a) has an upper surface which is corresponding to or slightly above said upper surface of said hitch plate.

8. A fifth wheel hitch as claimed in any preceding claim including a plurality of orifices (20) extending through said hitch plate in a spaced-apart pattern over said hitch plate; and
said pads (22,24) each having at least one integral boss (22a) extending downwardly therefrom so that said plurality of pads have a plurality of bosses;
said plurality of bosses being in a spaced-apart pattern corresponding to said orifice spaced-apart pattern.

9. A fifth wheel hitch as claimed in any preceding claim including a plurality of lubricious pads (22,24) configurated to form said bearing top surface over said hitch plate to withstand shear loads and torsional loads while allowing each pad to independently form a surface relationship with an overlying trailer bearing plate.

10. A fifth wheel hitch assembly comprising a hitch plate (12) and at least one bearing pad (22,24) characterised in that the hitch plate includes at least one orifice (20) and the bearing pad includes a corresponding projection (22a) to be received by the orifice, the bearing pad being retained against the hitch plate by a retainer (30) passing through the projection and recessed substantially to the level of the hitch plate.
